# EUROPEAN PATENT APPLICATION

(11) **EP 1 596 462 A1**
(43) Date of publication of application: **16.11.2005**
(21) Application number: 05009116.4
(22) Date of filing: 26.04.2005
(51) Int. Cl.: H01M 14/00, H01L 31/04

(54) **Photoelectrode substrate of dye sensitizing solar battery, and method for producing same**

(30) Priority: 27.04.2004 JP 2004130740; 18.02.2005 JP 2005041735
(71) Applicant: ENPLAS CORPORATION, Kawaguchi-shi, Saitama 332-0034 (JP)
(72) Inventor: Miyoshi, Kozo, Kitamoto-shi Saitama 364-0014 (JP)
(74) Representative: Manitz, Finsterwald & Partner GbR

(57) **Abstract**

There is provided a photoelectrode substrate of a dye sensitizing solar battery capable of preventing an electrolytic solution from directly contacting a transparent electrode film and of preventing a leak current from being produced, and a method for producing the same. The dye sensitizing solar battery 1 is formed by filling an electrolytic solution 4 in a space between a photoelectrode substrate 2 and a counter electrode substrate 3. The photoelectrodesubstrate 2 has a transparent electrode film 6 formed on the surface 5a of a substrate member 5, a titanium oxide film 7 formed by anodizing a titanium film which is formed on the transparent electrode film 6, a porous semiconductor electrode film 8 formed on the titanium oxide film 7, and a sensitizing dye absorbed and carried on the porous semiconductor electrode film 8.

## Description

### BACKGROUND OF THE INVENTION

### Field of the Invention

The present invention relates to a photoelectrode substrate of a dye sensitizing solar battery, a method for producing the substrate, and a dye sensitizing solar battery using the substrate.

### Description of the Prior Art

In recent years, from the point of view of environmental issues, solar batteries for converting light energy to electric energy have been widely noticed. In particular, dye sensitizing solar batteries have been widely noticed since the costs for producing them can be low. Originally, dye sensitizing solar batteries are not intended for practical use since they have a low photoelectric transfer efficiency. Recently, there has been developed a technique for increasing the surface area of a semiconductor electrode to cause the electrode to absorb a large amount of dye to conspicuously enhance the photoelectric transfer efficiency of a dye sensitizing solar battery (see, e.g., Japanese Patent Unexamined Publication No. 5-504023 (National Publication of Translated Version of PCT/EP91/00734)).

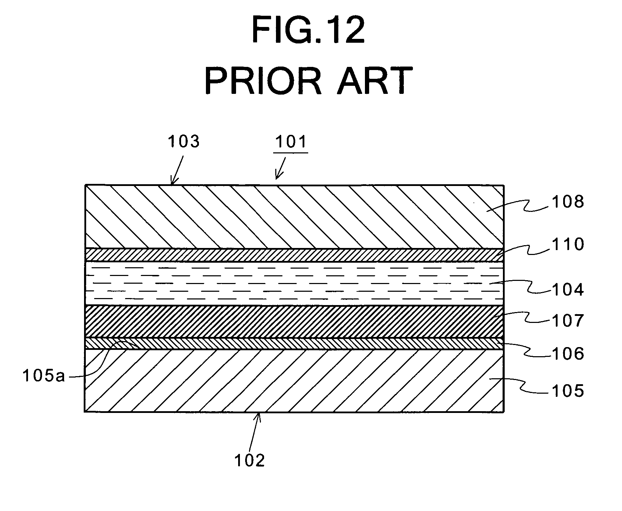

As an example of a conventional dye sensitizing solar battery using such a technique, there is known a dye sensitizing solar battery 101 shown in FIG. 12. The dye sensitizing solar battery 101 schematically shown in FIG. 12 comprises a photoelectrode substrate 102, a counter electrode substrate 103, and an electrolytic solution 104 filled in a space therebetween.

The photoelectrode substrate 102 comprises a substrate member 105, a transparent electrode film 106 formed on the surface 105a of the substrate member 105, and a porous semiconductor electrode film 107 of titanium oxide or the like formed on the porous semiconductor electrode film 106, the porous semiconductor electrode film 107 absorbing a dye. The porous semiconductor electrode film 107 is formed by a method comprising the steps of applying a suspension containing semiconductor particles on the transparent electrode film 106, and drying and burning it.

The counter electrode substrate 103 comprises a counter substrate member 108, and a counter electrode 110 formed on the counter substrate member 108 by coating a catalyst such as platinum thereon.

The substrate member 105 and the counter substrate member 108 are arranged so that the counter electrode 110 faces the porous semiconductor electrode film 107 at an interval. The electrolytic solution 104 is filled in the space between the counter electrode 110 and the porous semiconductor electrode film 107 to form the dye sensitizing solar battery 101.

However, in the above described conventional dye sensitizing solar battery 101, the porous semiconductor electrode film 107 provided between the electrolytic solution 104 and the transparent electrode film 106 is a porous material, so that there are some cases where the electrolytic solution 104 permeates the porous semiconductor electrode film 107 to directly contact the transparent electrode film 106. In such cases, a leak current is produced to deteriorate the power generation characteristics of the dye sensitizing solar battery 101.

In order to solve such a problem, there is adopted a method for forming a titanium oxide film between the transparent electrode film 106 and the porous semiconductor electrode film 107 by a sputtering method, a sol-gel method or the like. However, the titanium oxide film formed by any one of these methods does not a quality suitable for the dye sensitizing solar battery 101. In addition, even if the titanium oxide film can prevent the leak current, it prevents a current flowing between the porous semiconductor electrode film 107 and the transparent electrode film 106. Moreover, when the titanium oxide film is formed on the transparent electrode film 106 by the sol-gel method, if foreign matters adhere to the surface of the transparent electrode film 106 during the deposition of the titanium oxide film, there is a problem in that the electrolytic solution 104 enters the transparent electrode film 106 via pin holes which are formed in portions of the titanium oxide film to which the foreign matters adhere, so that the leak current is finally produced.

### SUMMARY OF THE INVENTION

It is therefore an object of the present invention to eliminate the aforementioned problems and to provide a photoelectrode substrate of a dye sensitizing solar battery capable of preventing an electrolytic solution from directly contacting a transparent electrode film and of preventing a leak current from being produced, and a method for producing the same.

In order to accomplish the aforementioned and other objects, according to one aspect of the present invention, there is provided a method for producing a photoelectrode substrate of a dye sensitizing solar battery wherein an electrolytic solution is filled in a space between a counter electrode of a counter electrode substrate and the photoelectrode substrate, the method comprising the steps of: forming a transparent electrode film on a surface of a substrate member; forming a titanium film on the transparent electrode film; anodizing the titanium film to form a titanium oxide film; forming a porous semiconductor electrode film on the titanium oxide film; and causing the porous semiconductor electrode film to absorb and carry a sensitizing dye. In this method, the titanium film may be formed on the transparent electrode film so as to have a desired pattern.

According to another aspect of the present invention, there is provided a photoelectrode substrate of a dye sensitizing solar battery wherein an electrolytic solution is filled in a space between a counter electrode of a counter electrode substrate and the photoelectrode substrate, the photoelectrode substrate comprising: a substrate member; a transparent electrode film formed on a surface of the substrate member; a titanium oxide film formed on the transparent electrode film, the titanium oxide film having a uniform crystal orientation; a porous semiconductor electrode film formed on the titanium oxide film; and a sensitizing dye absorbed and carried on the porous semiconductor electrode film. In this photoelectrode substrate, the titanium oxide film may have a desired pattern.

According to a further aspect of the present invention, a dye sensitizing solar battery comprises: the above described photoelectrode substrate; a counter electrode substrate having a counter electrode facing the photoelectrode substrate; and an electrolytic solution filled in a space between the photoelectrode substrate and the counter electrode substrate. In this dye sensitizing solar battery, the titanium oxide film may have a desired pattern.

According to the present invention, the titanium oxide film formed on the transparent electrode film by the anodizing method is a crystalline (e.g., anatase-type) TiO₂ film having a uniform direction of crystal growth, and has a lower value of electric resistance than that of a titanium oxide film formed by a sputtering or sol-gel method. In addition, it is possible to prevent electric pin holes from being formed. Therefore, it is possible to smoothly carry out the charge-transfer from the porous semiconductor electrode film to the transparent electrode film, and it is possible to prevent a leak current from being produced without damaging the power generation characteristics of the dye sensitizing solar battery.

### BRIEF DESCRIPTION OF THE DRAWINGS

The present invention will be understood more fully from the detailed description given herebelow and from the accompanying drawings of the preferred embodiments of the invention. However, the drawings are not intended to imply limitation of the invention to a specific embodiment, but are for explanation and understanding only.

In the drawings:
FIG. 1 is a schematic sectional view of a preferred embodiment of a photoelectrode substrate of a dye sensitizing solar battery according to the present invention;
FIG. 2 is a schematic sectional view showing a step of producing the dye sensitizing solar battery of FIG. 1;
FIG. 3 is a schematic sectional view showing a step of producing the dye sensitizing solar battery of FIG. 1;
FIG. 4 is a schematic sectional view showing a step of producing the dye sensitizing solar battery of FIG. 1;
FIG. 5 is a schematic sectional view of a dye sensitizing solar battery using the photoelectrode substrate of FIG. 1;
FIG. 6 is a graph showing the results of experiments on the relationship between voltage and current density of a dye sensitizing solar battery using a photoelectrode substrate in Example 1, in comparison with that of a conventional dye sensitizing solar battery;
FIG. 7 is a table showing the results of experiments shown in FIG. 6;
FIG. 8 is a graph showing the performance of a dye sensitizing solar battery according to the present invention in comparison with that of a conventional dye sensitizing solar battery, which shows the relationship between a voltage, which is applied between the photoelectrode substrate and counter electrode substrate of the dye sensitizing solar battery according to the present invention, and a current flowing therethrough, in comparison with that of the conventional dye sensitizing solar battery;
FIGS. 9A through 9D are schematic views showing steps of producing a photoelectrode substrate in Example 2 according to the present invention;
FIGS. 10A thorough 10E are schematic views showing steps of producing a photoelectrode substrate in Example 3 according to the present invention;
FIGS. 11A through 11E are schematic views showing steps of producing a photoelectrode substrate in Example 4 according to the present invention; and
FIG. 12 is a schematic sectional view of a conventional dye sensitizing solar battery.

### DESCRIPTION OF THE PREFERRED EMBODIMENTS

Referring now to the accompanying drawings, the preferred embodiment of the present invention will be described below in detail.

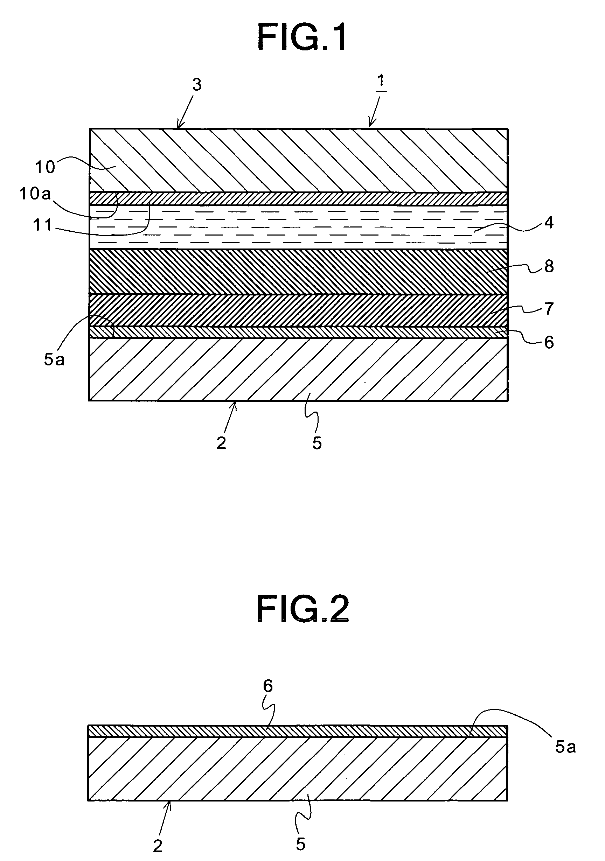

FIG. 1 shows the preferred embodiment of a dye sensitizing solar battery 1 according to the present invention. As shown in FIG. 1, the dye sensitizing solar battery 1 in this preferred embodiment comprises a photoelectrode substrate 2, a counter electrode substrate 3 and an electrolytic solution 4 filled in a space therebetween.

The photoelectrode substrate 2 comprises: a transparent plastic substrate member 5; a transparent electrode film 6 formed on the surface 5a of the transparent plastic substrate member 5; an anodized titanium oxide (TiO₂) film 7 formed on the transparent electrode film 6; and a porous semiconductor electrode film 8, formed on the titanium oxide film 7, for absorbing and carrying a sensitizing dye. The counter electrode substrate 3 comprises a plastic counter substrate member 10 and a counter electrode 11 formed on the surface thereof.

The substrate member 5 and the counter substrate member 10 may be made of a plastic, such as acrylic resin, polyethylene (PET), polyolefine or polycarbonate (PC).

The dye sensitizing solar battery 1 with the above described construction may be formed as follows.

First, as shown in FIG. 2, a transparent electrode film 6 of indium-tin oxide (ITO) is deposited on the surface 5a of a transparent plastic substrate member 5 of a photoelectrode substrate 2 by carrying out a sputtering process which uses plasma produced by a high-frequency discharge and which uses ITO as a target material, in a vacuum device (not shown) into which argon gas is fed.

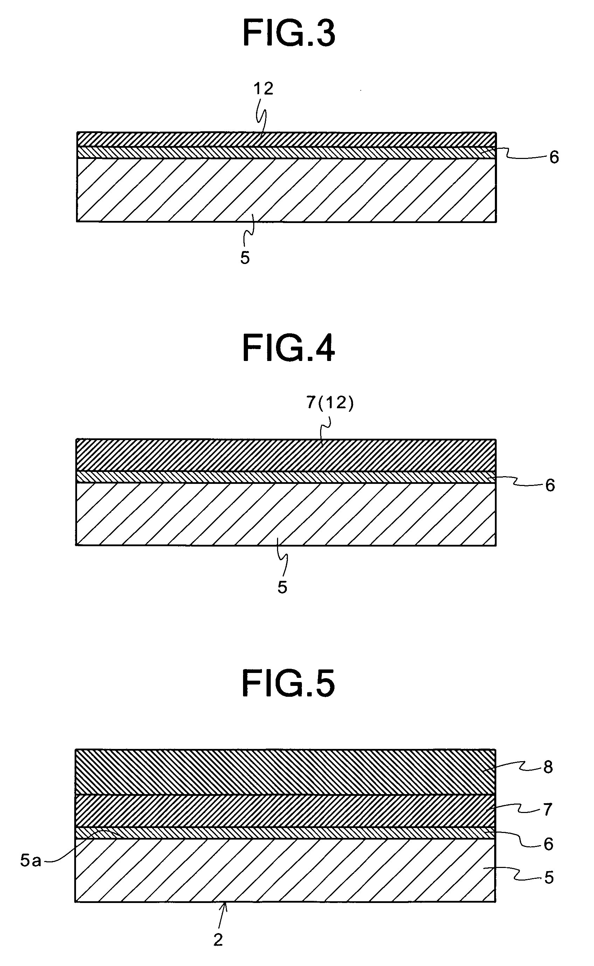

Then, the substrate member 5 having the transparent electrode film 6, together with titanium serving as a target material, is put into a vacuum device. Then, argon gas is fed into the vacuum device to carry out a sputtering process using plasma produced by DC discharge, so that a titanium film 12 is formed on the transparent electrode film 6 of the substrate member 5 as shown in FIG. 3. If the deposition of titanium in the vacuum device is sequentially carried out, the titanium film 12 can be formed on the transparent electrode film 6 without forming any barrier layer of impurities or the like on the interface between the transparent electrode film 6 and the titanium film 12. As a result, electric pin holes to be formed by the adhesion of foreign matters are not formed in the interface between the transparent electrode film 6 and the titanium film 12.

Then, the oxidation of the titanium film 12 is carried out by the plasma anodizing method. The plasma anodizing of the titanium film 12 is carried out by using plasma, which is produced by a high-frequency discharge while feeding oxygen gas into a vacuum device in which the substrate member 5 having the sequentially formed transparent electrode film 6 and titanium film 12 is arranged as an anode. If the substrate member 5 is thus arranged as the anode, negative ions of oxygen enter the substrate member 5 to be combined with the titanium film 12 on the surface thereof to form a titanium oxide (TiO₂) film 7 (see FIGS. 3 and 4).

The oxidation of the titanium film 12 by anodizing should not be limited to the above described plasma anodizing method, but a wet anodizing method may be used. When the oxidation of the titanium film 12 is carried out by the wet anodizing method, a platinum electrode is arranged as a cathode, and the substrate member 5 is arranged as an anode so as to face the platinum electrode. The platinum electrode and the substrate member 5 are soaked in an electrolytic solution. Then, after the titanium film 12 on the surface 5a of the substrate member 5 is electrically connected to the platinum electrode, a potential difference is produced between the titanium film 12 of the substrate member 5 and the platinum electrode. Thus, hydrogen is produced from the platinum electrode, and oxygen is taken into the titanium film 12, so that the titanium film 12 is changed to the titanium oxide film 7 (see FIGS. 3 and 4).

Titanium oxide thus formed by the plasma or wet anodizing method (which will be hereinafter simply referred to as the "anodizing method") grows in a direction perpendicular to the surface of the titanium film 12 in principle, so that it becomes a compact film (titanium oxide film 7) having a uniform crystal orientation (see FIGS. 3 and 4) . The titanium oxide film 7 formed by the anodizing method has a crystal system (e.g., anatase-type) which has the same uniform direction of crystal growth as that of a porous semiconductor electrode film 8 which is used for the dye sensitizing solar battery 1 and which will be described later.

Then, as shown in FIG. 5, on the titanium oxide film 7 formed by the anodizing method, a porous semiconductor electrode film 8 of porous titanium dioxide (TiO₂) is formed by the electrolytic deposition method. Then, on the porous semiconductor electrode film 8, a sensitizing dye (e.g., ruthenium complex) having a photoelectric transfer function is absorbed and carried.

Thus, as shown in FIG. 5, the photoelectrode substrate 2 is formed by sequentially stacking the transparent electrode film 6, the anodized titanium oxide film 7 and the porous semiconductor electrode film 8, which absorbs and carries the sensitizing dye, on the surface 5a of the substrate member 5. Furthermore, the porous semiconductor electrode film 8 may be formed of zinc oxide or the like in place of titanium dioxide. The porous semiconductor electrode film 8 may be formed by the burning method or the hydrothermal method in place of the electrolytic deposition method.

On the other hand, as shown in FIG. 1, the surface 10a of the counter substrate member 10 is coated with a counter electrode 11 of platinum (Pt). Thus, the counter electrode substrate 3 having the counter electrode 11 of platinum on the surface 10a of the counter substrate member 10 is formed. Furthermore, the counter electrode 11 may be formed of graphite in place of platinum.

The porous semiconductor electrode film 8 of the photoelectrode substrate 2 thus formed is arranged so as to face the counter electrode 11 of the counter electrode substrate 3 thus formed, and then, the electrolytic solution 4 is filled in a space between the porous semiconductor electrode film 8 and the counter electrode 11 to form the dye sensitizing solar battery 1 in this preferred embodiment (see FIG. 1). Furthermore, as the electrolytic solution 4, a redox electrolytic solution containing an oxidation-reduction pair, such as an iodine-iodine compound or a bromine-bromine compound, is usually used.

In the dye sensitizing solar battery 1 thus formed, if sunlight is incident on the photoelectrode substrate 2 from the outside, the sensitizing dye absorbed and carried on the porous semiconductor electrode film 8 is excited to an excited state from an electronic ground state. The electrons of the excited sensitizing dye are injected into the conduction band of TiO₂ forming the porous semiconductor electrode film 8, to move to the transparent electrode film 6 via the titanium oxide film 7, and then, to move from the transparent electrode film 6 to the counter electrode 11 via an external circuit (not shown). The electrons moving to the counter electrode 11 are carried on ions in the electrolytic solution 4 to return to the sensitizing dye. Such an operation is repeated to extract electric energy.

According to the dye sensitizing solar battery 1 in the above described preferred embodiment, the titanium oxide film 7 formed on the transparent electrode film 6 by the anodizing method is a crystalline (e.g., anatase-type) TiO₂ film having a uniform direction of crystal growth, and has a lower value of electric resistance than that of a titanium oxide film formed by a sputtering or sol-gel method. In addition, it is possible to prevent electric pin holes from being formed. As a result, according to the dye sensitizing solar battery 1 in this preferred embodiment, it is possible to smoothly carry out the charge-transfer from the porous semiconductor electrode film 8 to the transparent electrode film 6, and it is possible to prevent a short-circuit, which is caused by electric pin holes between the transparent electrode film 6 and the electrolytic solution 4, from being caused without damaging the power generation characteristics of the dye sensitizing solar battery 1, so that it is possible to prevent a leak current from being produced.

According to this preferred embodiment, the crystalline (e.g., anatase-type) titanium oxide film 7 having the uniform direction of crystal growth is provided between the transparent electrode film 6 and the porous semiconductor electrode film 8, and the titanium film 12 is formed on the transparent electrode film 6 by the sputtering method. In addition, the titanium film 12 is anodized to be the titanium oxide film 7, and the titanium oxide film 7 and the porous semiconductor electrode film 8 are made of the same kind of material to have an affinity to each other. Therefore, the mechanical adhesion and electric bonding state between the transparent electrode film 6 and the porous semiconductor electrode film 8 are better than those of the dye sensitizing solar battery disclosed in Japanese Patent Unexamined Publication No. 5-504023 wherein the porous semiconductor electrode film is formed directly on the transparent electrode film.

While the substrate member 5 and the counter substrate member 10 have been made of a plastic in the dye sensitizing solar battery 1 in this preferred embodiment, the present invention should not be limited thereto, but they may be made of a glass.

Since the dye sensitizing solar battery 1 in this preferred embodiment is designed to cause sunlight to be incident on the substrate member 5 , the substrate member 5 is made of a transparent plastic material having an excellent light permeability. Therefore, in this preferred embodiment, it is not always required that the counter substrate member 10 is made of a plastic material having an excellent light permeability. However, when the dye sensitizing solar battery 1 is designed to cause sunlight to be incident on the counter substrate member 10, it is required that the counter substrate member 10 is made of a plastic material having an excellent light permeability and that the counter electrode 11 is transparent. Thus, if the dye sensitizing solar battery 1 is designed to cause sunlight to be incident on the counter substrate member 10, the substrate member 5 and the transparent electrode film 6 may be made of a material having a bad light permeability.

While the whole titanium film formed on the transparent electrode film 6 has been changed to the titanium oxide film 7 by the anodizing method in the above described preferred embodiment, it is not always required to completely anodize the titanium film. In other words, even if an unanodized portion of the titanium film remains on the transparent electrode film 6, if the remaining titanium film is thin to such an extent that the permeability of light entering the photoelectrode substrate is not remarkably deteriorated, the advantageous effects of the present invention can be sufficiently expected. More specifically, if the thickness of the titanium film remaining on the transparent electrode film 6 without being anodized is 5 nm or less, an unanodized portion of the titanium film may remain on the transparent electrode film 6.

### Example 1

A first example of a method for producing a photoelectrode substrate according to the present invention will be described below.

In a method for producing a photoelectrode substrate in Example 1, there is used a substrate member with ITO film wherein an ITO film is formed on the surface of a polyethylene naphthalene (PEN) substrate member. The substrate member is a rectangular plate member having sides, each of which has a length of 5 cm, a thickness of 125 *µ*m and a value of electric resistance of 10 Ω / □. The substrate member with ITO film, together with titanium serving as a target material, is arranged in a vacuum device into which argon gas is fed at 50 sccm. Then, a sputtering process using plasma produced by Rf discharge (13.56 MHz, 400 W) is carried out for sixty seconds to form a titanium film 12 having a thickness of 10 nm on the surface of the ITO film (see FIG. 3). Thereafter, a platinum electrode is arranged as a cathode of an anodizing bath in which an electrolytic solution (a liquid formed by adding 0.1 g of ammonium dihydrogenphosphate to 1L of pure water) is filled, and the substrate member with ITO film, on which the titanium film 12 is formed, is arranged as an anode of the anodizing bath. Then, the titanium film 12 of the anode is electrically connected to the platinum electrode to cause a potential difference between the cathode and the anode. The potential difference between the cathode and the anode is designed to gradually increase from 0 V to 5 V in one minute, and to maintain the voltage of 5 V after it reaches 5V. In this anodizing process, the current value decreases as the increase of the thickness of a barrier layer (titanium oxide film) formed on the titanium film 12 by anodizing. The anodizing process is continued until the decrease of the current value is stopped. Bycarryingout such an anodizing process, the crystalline (e.g., anatase-type) titanium oxide film 7 having the uniform direction of crystal growth is formed on the transparent electrode film 6 so as to have a thickness of 20 nm (see FIG. 4).

Then, a titania application paste for a low-temperature deposition is applied on the anodized titanium oxide film 7 so as to have a thickness of 50 *µ*m, and is heated at 150 °C for five minutes to form a porous semiconductor electrode film 8 having a thickness of 5 *µ*m on the titanium oxide film 7 (see FIG. 5). Then, the porous semiconductor electrode film 8 is caused to absorb a ruthenium complex dye (a Ru bipyridyl complex dye). Thus, there is completed a photoelectrode substrate 2 according to the present invention wherein the transparent electrode film 6 is formed on the surface 5a of the plastic substrate member 5, the anodized titanium oxide (TiO₂) film 7 is formed on the transparent electrode film 6, and the porous semiconductor electrode film 8 absorbing and carrying the sensitizing dye is formed on the titanium oxide film 7 (see FIG. 5) .

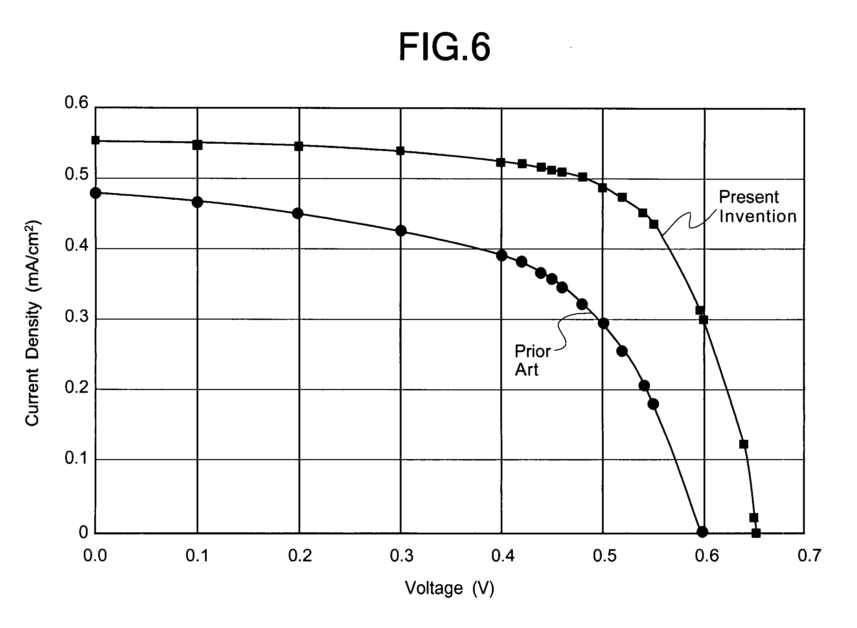

FIG. 6 is a graph showing the results of experiments on current-voltage characteristics of the dye sensitizing solar battery 1 according to the present invention (the dye sensitizing solar battery 1 having the photoelectrode substrate 2 in this example) in comparison with those of the conventional dye sensitizing solar battery 101. Furthermore, FIG. 6 shows the current-voltage characteristics measured when the dye sensitizing solar battery 1 according to the present invention has the same construction as that of the conventional dye sensitizing solar battery 101, except for the photoelectrode substrates 2 and 102. In addition, a light source having a light irradiation energy of 10 mW/cm² was used for the experiments.

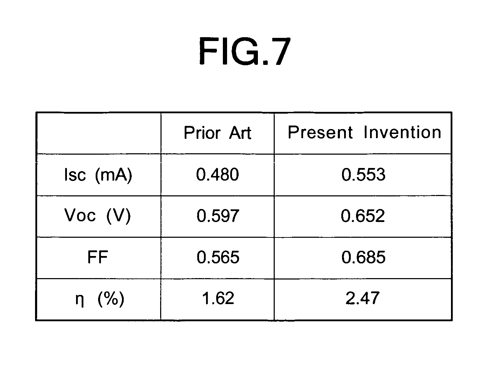

FIG. 7 is a table showing the results of experiments shown in FIG. 6. In FIG. 7, Isc denotes a short-circuit light current, and Voc denotes an open end voltage, FF denoting a curve factor, and *η* denoting a conversion efficiency.

As shown in FIGS. 6 and 7, the curve factor FF of the dye sensitizing solar battery 1 according to the present invention is enhanced to be about 1.2 times as large as the curve factor FF of the conventional dye sensitizing solar battery 101. In addition, the conversion efficiency *η* of the dye sensitizing solar battery 1 according to the present invention is enhanced to be about 1.5 times as large as the conversion efficiency *η* of the conventional dye sensitizing solar battery 101. It is considered that such differences in performance between the dye sensitizing solar battery 1 according to the present invention and the conventional dye sensitizing solar battery 101 is caused by the titanium oxide film 7, which is formed by anodizing, of the photoelectrode substrate 2 according to the present invention.

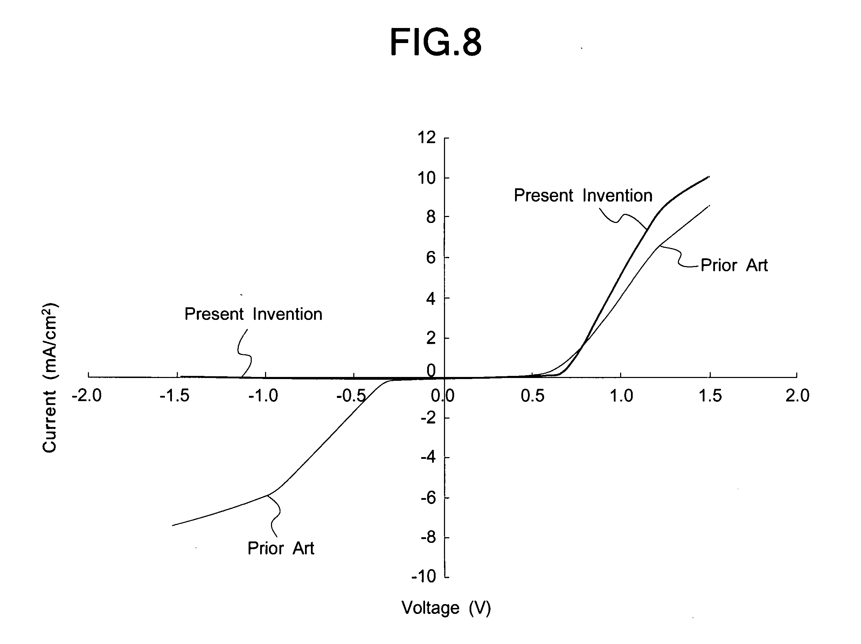

FIG. 8 is a graph showing a current flowing through the dye sensitizing solar battery 1 according to the present invention when a voltage is applied between the photoelectrode substrate 2 and the counter electrode substrate 3, in comparison with a current flowing through the conventional dye sensitizing solar battery 101 when a voltage is applied between the photoelectrode substrate 102 and the counter electrode substrate 103. As can be seen from this figure, the dye sensitizing solar battery 1 according to the present invention causes no reverse current, whereas the conventional dye sensitizing solar battery 101 causes a reverse current. The reason for this is considered that the titanium oxide film 7 formed by the anodizing process in the photoelectrode substrate 2 according to the present invention can prevent the leak current from the ITO film toward the electrolytic solution 4 (see FIG. 1), whereas the conventional photoelectrode substrate 102 can not effectively prevent the leak current from the ITO film toward the electrolytic solution 104 (see FIG. 12).

### Example 2

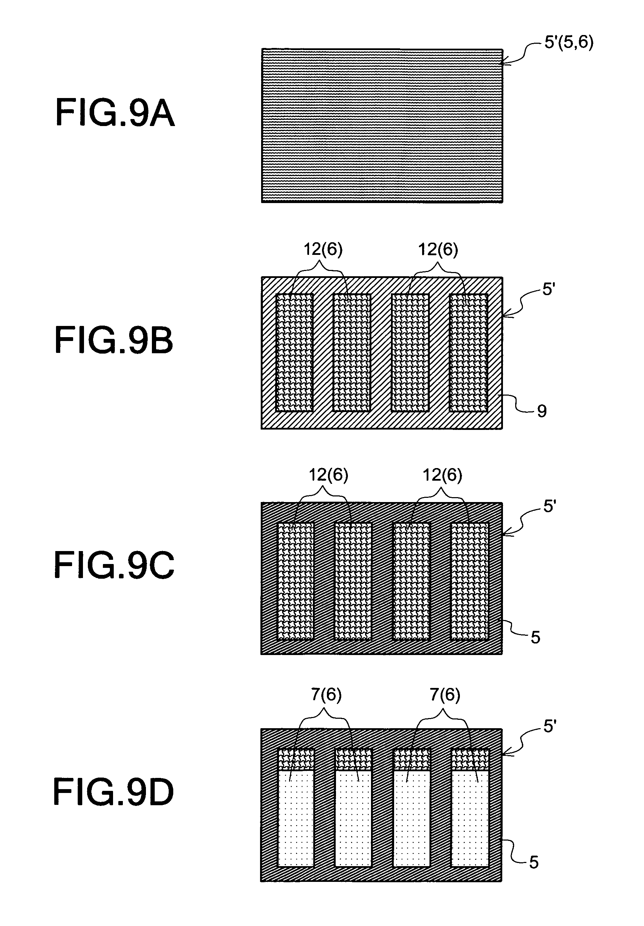

FIGS. 9A through 9D show a second example of a method for producing a photoelectrode substrate 2 according to the present invention as a first modified example of the above described first example.

In this modified example, as shown in FIG. 9A, a substrate member 5 having a transparent electrode film 6 of ITO on the surface thereof (which will be hereinafter referred to as a "substrate member 5' with ITO") is prepared. Then, as shown in FIG. 9B, after the transparent electrode film 6 is masked with a mask material 9 having a desired pattern, a titanium film 12 having a thickness of, e.g., 10 nm, is formed on the exposed rectangular portions of the transparent electrode film 6 by sputtering. Thus, a plurality of titanium films 12 having a desired pattern can be formed on the transparent electrode film 6.

Then, as shown in FIG. 9C, the mask material 9 is removed, and the transparent electrode film 6 surrounding the titanium films 12 is removed by a wet etching. Thus, the substratemember 5 of the substrate member 5' with ITO is exposed around the titanium films 12.

Then, as shown in FIG. 9D, the substrate member 5' with ITO is arranged in a wet anodizing bath (containing 0.01% of ammonium phosphate) to anodize the titanium films 12 on the transparent electrode film 6, which remains on the substrate member 5' with ITO, to form a plurality of titanium oxide films 7 having a desired pattern.

Then, a porous semiconductor electrode film 8 is formed on the plurality of titanium oxide films 7 to absorb a sensitizing dye to complete a photoelectrode substrate 2 in this modified example (see FIG. 5).

Furthermore, in the photoelectrode substrate 2 in this example, the four titanium oxide films 7 having the same rectangular shape are arranged on the substrate member 5' with ITO in parallel. However, the present invention should not be limited thereto. The number of the titanium oxide films 7 arranged in parallel, and the planar shape and size of each of the titanium oxide films 7, and the arrangement of the titanium oxide films 7 may be suitably changed.

### Example 3

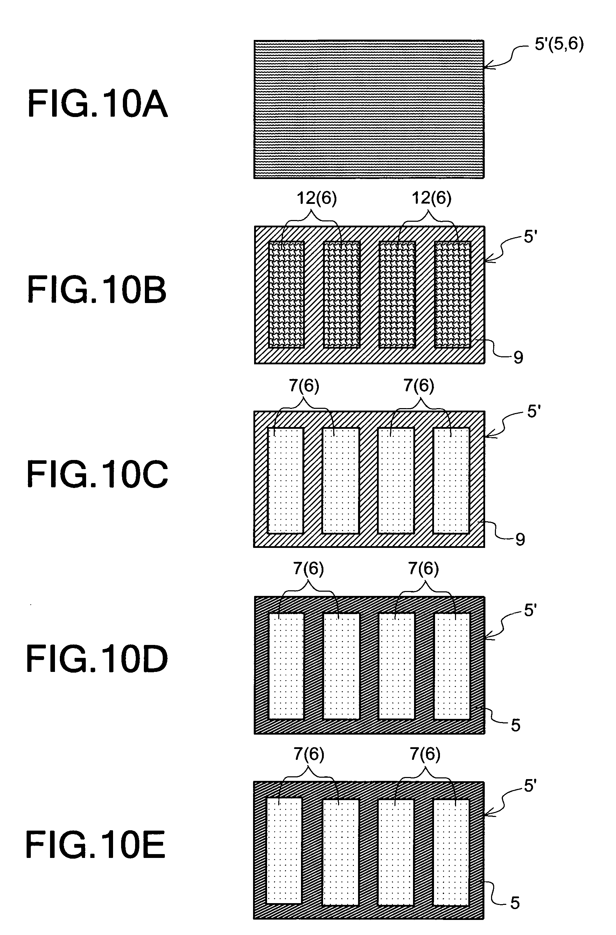

FIGS. 10A through 10E show a third example of a method for producing a photoelectrode substrate 2 according to the present invention as a secondmodified of the above described first example.

In this modified example, as shown in FIG. 10A, a substrate member 5 having a transparent electrode film 6 of ITO on the surface thereof (which will be hereinafter referred to as a "substrate member 5' with ITO") is prepared. Then, as shown in FIG. 10B, after the transparent electrode film 6 is masked with a mask material 9 having a desired pattern, a titanium film 12 having a thickness of, e.g., 10 nm, is formed on the exposed rectangular portions of the transparent electrode film 6 by sputtering. Thus, a plurality of titanium films 12 having a desired pattern can be formed on the transparent electrode film 6. These steps are the same as those in the above described first modified example.

Then, as shown in FIG. 10C, the substrate member 5' with ITO is arranged in a wet anodizing bath (containing 0.01% of ammonium phosphate) to anodize the titanium films 12 to form a plurality of titanium oxide films 7.

Then, as shown in FIG. 10D, the mask material 9 is removed, and the transparent electrode film 6 surrounding the titanium oxide films 7 is removed by a wet etching. Thus, the substrate member 5 of the substrate member 5' with ITO is exposed around the titanium oxide films 7.

Then, as shown in FIG. 10E, the substrate member 5' with ITO is arranged in a wet anodizing bath (containing 0.01% of ammonium phosphate) again to anodize the titanium oxide films 7 having a desired pattern again.

Then, a porous semiconductor electrode film 8 is formed on the plurality of titanium oxide films 7 to absorb a sensitizing dye to complete a photoelectrode substrate 2 in this modified example (see FIG. 5).

Furthermore, in the photoelectrode substrate 2 in this example, the four titanium oxide films 7 having the same rectangular shape are arranged on the substrate member 5' with ITO in parallel. However, the present invention should not be limited thereto. The number of the titanium oxide films 7 arranged in parallel, and the planar shape and size of each of the titanium oxide films 7, and the arrangement of the titanium oxide films 7 may be suitably changed.

### Example 4

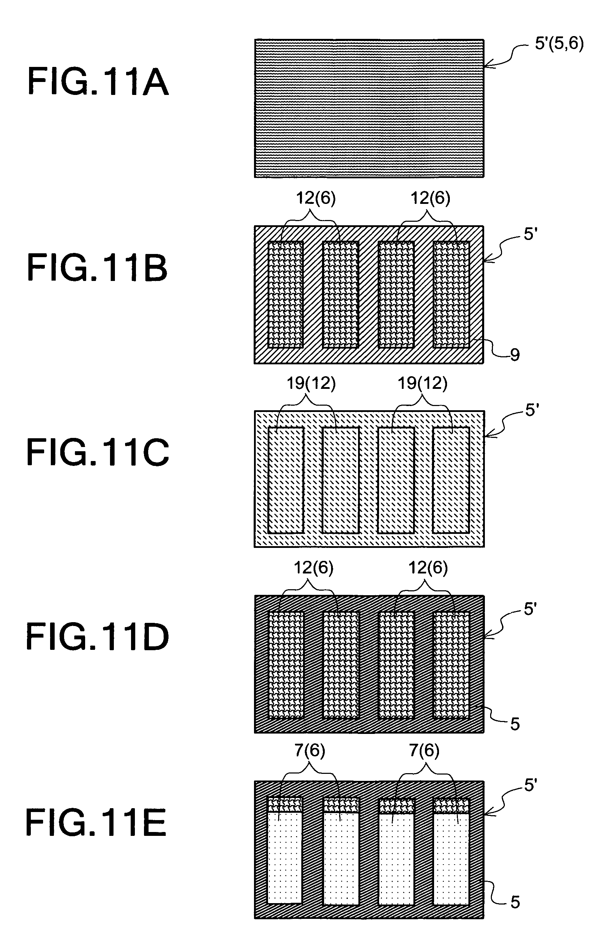

FIGS. 11A through 11E show a fourth example of a method for producing a photoelectrode substrate 2 according to the present invention as a third modified example of the above described first example.

In this modified example, as shown in FIG. 11A, a substrate member 5 having a transparent electrode film 6 of ITO on the surface thereof (which will be hereinafter referred to as a "substrate member 5' with ITO") is prepared. Then, as shown in FIG. 11B, after the transparent electrode film 6 is masked with a mask material 9 having a desired pattern, a titanium film 12 having a thickness of, e.g., 10 nm, is formed on the exposed rectangular portions of the transparent electrode film 6 by sputtering. Thus, a plurality of titanium films 12 having a desired pattern can be formed on the transparent electrode film 6. These steps are the same as those in the above described first and second modified examples.

Then, as shown in FIG. 11C, a resist 19 is applied on the whole surface of the substrate member 5' with ITO, which has the titanium films 12, and is exposed from the reverse of the substrate member 5' with ITO to be developed.

Then, as shown in FIG. 11D, the transparent electrode film 6 surrounding the titanium films 12 is removed by a wet etching. Thus, the substrate member 5 of the substrate member 5' with ITO is exposed around the titanium films 12. Thereafter, the resist 19 formed on the titanium films 12 is removed.

Then, as shown in FIG. 11E, the substrate member 5' with ITO is arranged in a wet anodizing bath (containing 0.01% of ammonium phosphate) to anodize the titanium films 12 on the transparent electrode film 6, which remains on the substrate member 5' with ITO, to form a plurality of titanium oxide films 7 having a desired pattern.

Then, a porous semiconductor electrode film 8 is formed on the plurality of titanium oxide films 7 to absorb a sensitizing dye to complete a photoelectrode substrate 2 in this modified example (see FIG. 5).

Furthermore, in the photoelectrode substrate 2 in this example, the four titanium oxide films 7 having the same rectangular shape are arranged on the substrate member 5' with ITO in parallel. However, the present invention should not be limited thereto. The number of the titanium oxide films 7 arranged in parallel, and the planar shape and size of each of the titanium oxide films 7, and the arrangement of the titanium oxide films 7 may be suitably changed.

If a plurality of dye sensitizing solar batteries in this preferred embodiment are connected to each other in series, or if a plurality of solar battery series, each of which is formed by connecting a plurality of dye sensitizing solar batteries in this preferred embodiment to each other in series, are connected to each other in parallel to form a dye sensitizing solar battery assembly, it is possible to obtain electric energy having a desired voltage value. Moreover, if the dye sensitizing solar battery assembly is connected to a storage battery, it is possible to store electric energy.

## Claims

1. A method for producing a photoelectrode substrate of a dye sensitizing solar battery wherein an electrolytic solution is filled in a space between a counter electrode of a counter electrode substrate and the photoelectrode substrate, said method comprising the steps of:
forming a transparent electrode film on a surface of a substrate member;
forming a titanium film on the transparent electrode film;
anodizing the titanium film to form a titanium oxide film;
forming a porous semiconductor electrode film on the titanium oxide film; and
causing the porous semiconductor electrode film to absorb and carry a sensitizing dye.

2. A method for a producing a photoelectrode substrate of a dye sensitizing solar battery as set forth in claim 1, wherein said titanium film is formed on said transparent electrode film so as to have a desired pattern.

3. Aphotoelectrode substrate of a dye sensitizing solar battery wherein an electrolytic solution is filled in a space between a counter electrode of a counter electrode substrate and the photoelectrode substrate, said photoelectrode substrate comprising:
a substrate member;
a transparent electrode film formed on a surface of the substrate member;
a titanium oxide film formed on the transparent electrode film, said titanium oxide film having a uniform crystal orientation;
a porous semiconductor electrode film formed on the titanium oxide film; and
a sensitizing dye absorbed and carried on the porous semiconductor electrode film.

4. Aphotoelectrode substrate of a dye sensitizing solar battery as set forth in claim 3, wherein said titanium oxide film has a desired pattern.

5. A dye sensitizing solar battery comprising:
a photoelectrode substrate as set forth in claim 3;
a counter electrode substrate having a counter electrode facing the photoelectrode substrate; and
an electrolytic solution filled in a space between the photoelectrode substrate and the counter electrode substrate.

6. A dye sensitizing solar battery as set forth in claim 5, wherein said titanium oxide film has a desired pattern.
